# EUROPEAN PATENT SPECIFICATION

(11) **EP 0 881 543 B1**
(45) Date of publication and mention of the grant of the patent: **19.06.2002**
(21) Application number: 98202436.6
(22) Date of filing: 31.03.1994
(51) Int. Cl.: G03G 5/02, G03G 5/14, G03G 11/00

(54) **Electrographic imaging element and process**
Verfahren und Element für elektrophotographische Bildherstellung
Procédé et élément électrophotographique

(30) Priority: 02.04.1993 US 42278; 03.09.1993 US 115562; 03.09.1993 US 115563; 29.03.1994 US 219395
(43) Date of publication of application: 02.12.1998
(62) Divisional of application: 94912935.7
(73) Proprietor: Rexam Graphics Inc., South Hadley, MA 01075-2894 (US)
(72) Inventor: Cahill, Douglas Allan, Belchertown, Massachusetts 01007 (US); Himmelwright, Richard, Scott, Wilbraham, Massachusetts 01095 (US); Taylor, Dene, Harvey, Holyoke, Massachusetts 04040 (US); Brault, Donald, Armad, Granby, Massachusetts 01033 (US); Webb, Anthony, Keith, Vancouver, Washington 98686 (US)
(74) Representative: Hillier, Peter

(56) References cited:
- EP-A- 0 435 599
- EP-A- 0 454 233
- DE-A- 4 036 463
- US-A- 4 920 356

## Description

The invention relates to electrographic processes for making colour images. More particularly, the invention relates to electrographic processes and the elements used therein for the production of large size, full colour images.

The use of electrographic processes to generate images, including multicolour images, is well known in the art. In such processes, a latent image in the form of a distribution of electric charges is produced directly on a substrate having a dielectric surface using an electrographic printer. The printer operates by depositing charge imagewise onto the dielectric surface of the substrate using a scanning stylus or a plurality of styli may be used arranged in linear arrays across the width of the moving dielectric surface to create charge patterns. The latent image is then made visible by applying toner particles which adhere to the charged areas on the charged surface.

Colour images may be generated using serially positioned charge depositing and toning stations which operate sequentially to apply three or four colours on a moving web to generate a coloured image thereon.

A problem with the resulting toned image is that it is vulnerable to damage in handling and viewing. Protective coatings for the toned surface are often used to give resistance to abrasion, UV light degradation, bacterial degradation, moulds and fungi, unwanted markings especially graffiti or to chemical degradation from water, smog or other chemical agent by applying an additional coating by lamination or spray to the electrographic image.

Another problem for the electrographic printing industry is that there are many substrates upon which it is desirable to print but which are not suitable for direct electrographic imaging. Thick films, papers and boards, wooden, ceramic and metal surfaces are but a few examples. A transfer process must be used to place an electrographically generated image on these surfaces.

One such transfer process is disclosed in US-A-5108865. In the disclosed process, a liquid toned image is generated on the surface of an electrographic element. The image is adhered to the adhesive surface of an intermediate receptor sheet which comprises a carrier layer, releasable release layer, and a transferable adhesive layer secured to the release layer. The intermediate receptor sheet with the image adhered thereto is removed from the electrographic element, and the toned image now on the intermediate receptor sheet is contacted with a final receptor surface. The adhesive layer secures the toned image, adhesive layer and release layer to the final receiving layer and the carrier layer is removed from the release layer.

EP-A-0437073 discloses an electrographic imaging process in which an intermediate toned image is formed on a temporary dielectric receptor. The intermediate image is then transferred from the temporary dielectric receptor to a permanent receptor.

In the prior art electrographic processes disclosed above, there occurs a transfer of the toner particles forming the image from an electrographic element to the final substrate.

Although advances have been made in retaining the integrity of the transferred image, some transferred image degradation still occurs, and abrasion or chemical interaction after transfer remains a problem which is cured by adding laminating or overcoating steps. There is a need for a simplified process to provide protected, distortion free, full colour images, particularly for use on large format posters, billboards and the like.

DE-A-40364463 discloses a method of forming an image comprising forming an electrostatic latent image in accordance with an electric signal, forming a visible image by use of a toner, bringing the face carrying the visible image together with a dielectric layer on an insulating support by pressing and heating. The support having an electro-conductive layer and a dielectric layer thereon and at least one further dielectric layer on one of said layers and peelable therefrom.

EP-A-0435599 discloses an imaging member containing a conductive layer and a uniform and continuous dielectric layer free of voids, the imaging layer having a dielectric constant of from about 1.5 to about 40 and a thickness of at least about 45 microns, the thickness divided by the dielectric constant having a value of 30 to 40 microns.

US-A-4920356 discloses an electrographic element comprising a substrate having a conductive layer on an insulating support, a dielectric layer having an image area on the conductive layer, conductive particles embedded in the image area and in contact with the conductive area and extending through the dielectric layer to provide a conductive path between the conductive layer and ground. Insulating particles in the image area extend therethrough to provide a substantially uniform distance between the dielectric layer and the syli of a writing head.

EP-A-0454233 discloses a multilayer polymeric film for use in an electrostatic recording process. The film comprises an image receptive layer, an electroconductive layer and a supporting layer. A transport-assisting layer may be coated on the side opposite the imaging layer.

The invention provides an electrographic element comprising a conductive base and a transparent imaging layer structure, wherein the transparent imaging layer structure has a surface on which a toned image is intended to be formed, wherein the transparent imaging layer structure is transparent in at least one region of the visible spectral region, wherein the transparent imaging layer structure includes a dielectric layer having a dielectric constant between 2 and 5, wherein the imaging layer structure comprises said dielectric layer and, over said dielectric layer, an adhesive layer, whose adhesive properties are activated at a pressure and, optionally, at a temperature which are above ambient pressure and temperature of the electrographic element, and wherein the toned image is formed on the adhesive layer. The adhesive properties of the adhesive layer may be activated at a pressure and temperature above the ambient pressure and temperature of the electrographic element.

The conductive base may comprise a conductive carrier layer having a release layer coated thereon, said release layer being in contact with said transparent imaging layer structure.

The electrographic element may comprise a protective layer between the conductive base and the dielectric layer.

A side of the base in contact with the imaging layer structure may comprise an image pattern and a surface of the imaging layer structure in contact with said embossed pattern may be embossed with such image pattern.

The imaging layer structure may include a U.V. radiation absorbent layer, such layer located between the base and the toned electrographic image.

The invention will now be described in more detail and with reference to the accompanying drawings in which:
Figure 1 shows a schematic representation of an electrographic element structure for use with the process of the present invention.
Figure 2 is a schematic representation of the base structure of the element of figure 1.
Figure 3 is a schematic representation of the imaging layer structure of the element of figure 1.
Figure 4 is a schematic representation of a preferred electrographic element structure having combined dielectric and adhesive layers for use with the process of the present invention.
Figure 5 is a schematic representation of an apparatus useful for imaging the electrographic element in accordance with this invention.
Figure 6 shows in a schematic representation an imaged electrographic element in accordance with the present invention.
Figure 7 shows in a schematic representation the element of figure 4 laminated onto a permanent receptor.
Figure 8 shows in a schematic representation the final image on the permanent receptor, after the base has been removed.
Figure 9 shows a cross sectional view of the laminated composite of the imaged electrographic element and the permanent receptor taken along line 9-9 of the illustration of figure 8.
Figure 10 illustrates in schematic representation the process of lamination of the element onto a permanent receptor followed by the stripping of the base.
Figure 11 illustrates in schematic representation the situation where the adhesive layer is placed on the permanent receptor surface.

### DETAILED DESCRIPTION OF THE INVENTION

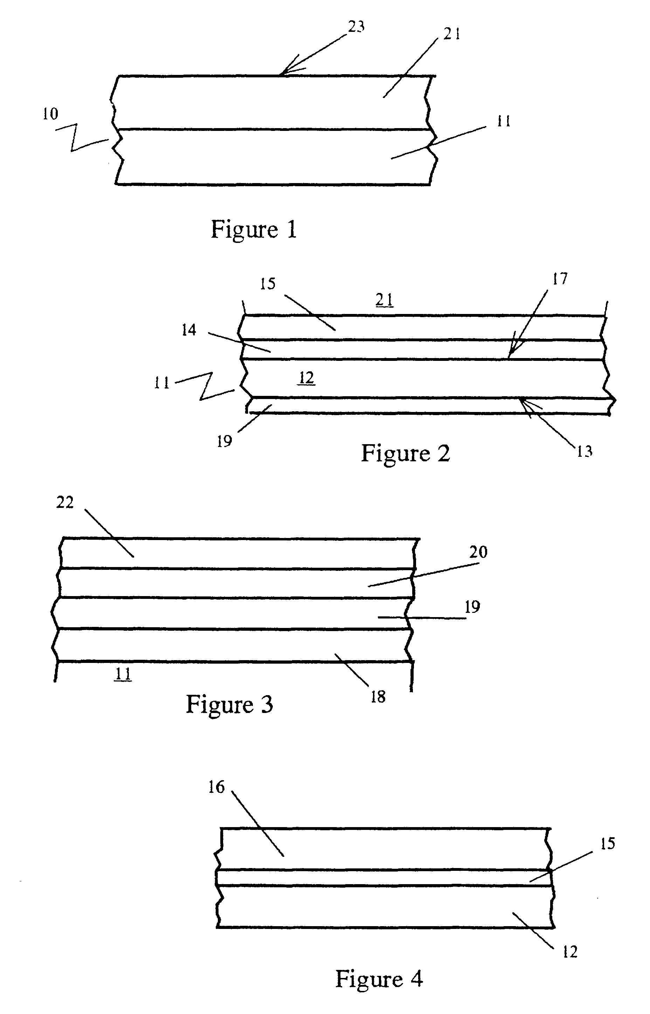

The electrographic process of this invention will now be described by reference to the accompanying drawings. Throughout the following description, similar reference characters refer to similar elements in all figures of the drawings. Referring to figure 1, an electrographic element (10) is shown for use in the present invention. The element comprises a conductive base (11) and an imaging layer structure (21) coated over said base. The imaging layer structure (21) has an image receptive surface (23).

The base (11) functions as a support to the superposed layers and may be any web or sheet material possessing suitable flexibility, dimensional stability and adherence properties to those layers. Typically, the base will have an electrical resistivity of about 1 to 30 meg-ohm per □.

Suitable web or sheet materials for the base are flexible polymeric films, e.g., such as polyethylene terephthalate film and the like, or a foraminous material, e.g., such as a paper sheet and the like, treated to be electrically conductive or semi-conductive. Other suitable materials are for instance, metal foils, metallized polymeric films such as polyethylene terephthalate films having a metallic coating thereon, conductive paper sheeting and the like.

As shown in Figure 2, the base may itself comprise a multilayer structure. In its simplest form, the base may include a carrier sheet (12) which is conductive, having a front side (17) and a back side (13) The front side (17) is covered by a release layer (15) over which is placed the imaging layer structure (21). In an alternate embodiment, a conductive layer (14) is coated over the carrier sheet (12) between the carrier sheet and the release layer. In yet another embodiment, the back side (13) of carrier sheet (12) is also covered by a conductive layer (19).

When the base comprises a carrier sheet (12), the carrier sheet (12) is again a flexible web or sheet material, which may again be a flexible polymeric film, e.g., such as polyethylene terephthalate film and the like, or a foraminous material, e.g., such as a paper sheet and the like. A conductive layer (14) may be coated over the carrier sheet (12) or the carrier sheet (12) may or may not be itself conductive.

The conductive layer (14) preferably comprises a film-forming material which may be an organic material, e.g., such as a cation type styrene-methacrylate copolymer having an electrical resistivity of about 1 to 30 meg-ohm per □. Other suitable film-forming, organic materials include polymeric quaternary ammonium compounds, polystyrene sulfonic acid, polymeric matrices capable of ionizing inorganic electrolytes contained therein, and the like. The film-forming, organic material may be used alone or with conductive, inorganic materials and/or metals dispersed therein, e.g., such as tin oxide, aluminum and the like.

The release layer (15) which is adhered to the front surface (17) of the base (11) or to the conductive layer (14) as shown in figure 2, typically comprises a film forming silicone polymer, or a film forming fluoropolymer. The release layer may also be heat cured, U.V. radiation cured, or electron beam cured. The release layer may itself be conductive or contain conductive agents such as a quaternary ammonium polymer, and may further include a surfactant. Good release performance has been obtained when the surface energy of the release layer is between 20 and 40 dynes/cm and preferably between 25 and 35 dynes/cm.

The imaging layer structure (21) used in this invention is transparent. A transparent imaging layer structure is one in which the layers and combination of layers of the structure, allow sufficient radiation transmission in at least one region of the visual spectrum to allow the visual observation of a toned image placed on one side of said layer structure from the other side of the layer structure.

The imaging layer structure (21) also comprises one or more distinct layers each having a specific function. Figure 3 shows such a structure which may include a protective layer (19), and includes a dielectric layer (20), and an adhesive layer (22), and may even include a conductive layer (18), placed in the order shown. All of these layers must be transparent. In the simplest form the imaging layer structure includes only the dielectric layer (20).

The dielectric layer (20), may be any conventional film-forming material having a dielectric constant of about 2 to about 5. This layer typically has a thickness in the range of about 1 µm to about 20 µm and preferably in the range of about 5 µm to about 15 µm. The layer (20), typically comprises one or more polymers selected from polyvinylacetate, polyvinylchloride, polyvinylbutyral, polymethylmethacrylate, styrenated acrylics, styrene acrylonitrile, and the like. Other ingredients may be chosen from waxes, polyethylene, alkyd resins, nitrocellulose, ethylcellulose, cellulose acetate, shellac, epoxy resins, styrene-butadiene copolymers, clorinated rubbers, polyacrylates, and the like. The property requirements of the dielectric layer (20) are well known in the art as disclosed, for example, in U.S. Patents 3,920,880 and 4,201,701.

It is preferred for this layer to have a high degree of transparency. Transparency is aided by avoiding the use of opaque pigments, and by minimizing the content of other pigments, light scattering or light absorbing materials.

Preferably the dielectric layer is formulated for solvent coating, or it may be formulated from hot melt extrudable resins and coated using hot melt extrusion techniques.

Still referring to figure 3, the imaging layer structure includes in addition to the dielectric layer 20, an adhesive layer (22) as a separate layer.

The adhesive layer (22) may be a substantially tack-free, thermal adhesive which is activated at a pressure and a temperature that is above the normal ambient pressure and temperature of the electrographic element prior to use. The adhesive layer (22) may be chosen from a variety of conventional thermal adhesive materials. Typically, the thermally activated adhesive material is comprised of thermoplastic polyurethanes; polycaprolactone; acrylic copolymers; and combinations thereof. Representative thermally activated adhesive materials include Morthane® CA-116 urethane resin (a product of Morton International); Tone® Polymer P767E biodegradable plastic resin (a product of Union Carbide); Elvax® 240 vinyl resin (a product of Dupont Chemicals); and the like. The adhesive layer (22) is visually transparent in at least one region within the visible spectral region and typically is transparent throughout the visible spectral region.

The surface of the adhesive layer (22) may be rough to ensure good transfer of charge during passage of the element under the stylus bar during imaging. This roughness can be obtained by including in the layer particles sufficiently large to give surface irregularities to the layer. Particles of diameter in the range of about 1 µm to about 15 µm are suitable. Particle composition and size are chosen to give the required dielectric constant to the layer as well as the appropriate surface topography and abrasive properties to the layer

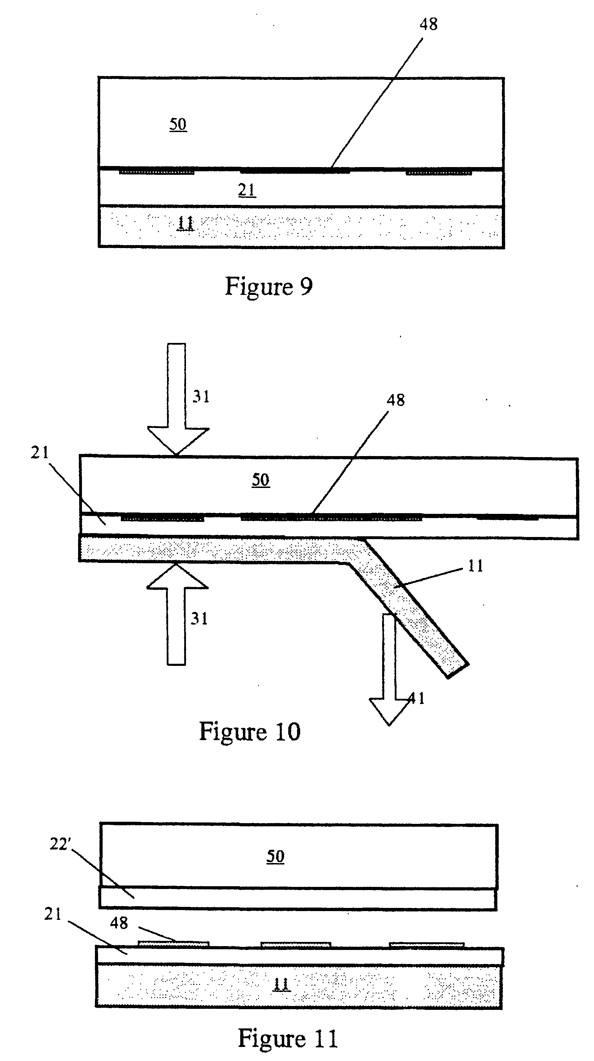

It is contemplated that in performing the process of this invention, the adhesive layer may be placed not on the electrographic element, but on the surface of a substrate serving as a permanent receptor, on which it is desired to transfer the electrographic image as described below as shown in figure 11. In that case, prior to the transfer step, the surface of the permanent receptor that will receive the image, is coated with an adhesive to form an adhesive layer (22'). In that case, the adhesive may be one that is spayed thereon, e.g. 3M Scotch™ Brand Spray Mounts Artists Adhesive, particularly where the surface or overall nature of the receptor is such that other coating methods are impractical; or the adhesive may be coated with a roller, or again applied by lamination or other coating techniques.

The adhesive layer (22'), may exhibit tackiness at room temperatures, or may be non tacky at room temperatures and be heat or pressure activated. Heat activated adhesive layers may be chosen from a variety of conventional thermal adhesive materials and may be the same as described above for use in the adhesive layer (22). On the other hand, adhesives used on the receptor surface need not be transparent.

The adhesive layer (22') on the receptor surface, may be created just prior to image transfer, or may be created ahead of time at a different location from where the transfer is to occur. If tacky at room temperatures, the adhesive layer (22'), may be protected with a removable cover sheet which is be removed prior to use and discarded.

The electrographic element may be formulated to provide the necessary resistance to abrasion and U.V. or other detrimental radiation as well as contain biocides and fungicides to act as a protective layer. The use of Butvar® polyvinyl butyral in the dielectric formulation for instance results in a dielectric layer with excellent resistance to scratching. In an alternate embodiment, a protective layer (19) separate from the dielectric layer may be provided, as shown in figure 3.

The protective layer (19) is a polymeric film material which is resistant to scratching, abrasions and the like, and to environmental components and contaminants, and may also include biocides and fungicides. The protective layer (19) is also visually transparent in at least one region within the visible spectral region and typically is transparent throughout the visible spectral region. Polymeric materials which are useful in making this layer include polyvinyl chloride; polyvinyl butyral; cellulose acetate propionate; cellulose acetate butyrate; polyesters; acrylics; polyurethanes; styrene copolymers, e.g., such as styrene acrylonitrile; and combinations thereof. This layer typically has a thickness in the range of about 0.5 µm to about 10 µm and preferably in the range of about 1 µm to about 4 µm. Such layer typically will withstand scribing with the point of a 4H pencil without breakthrough.

In certain instances it may be desirable to include a transparent conductive layer (18) as a part of the imaging layer structure. Such layer may be formulated to act as a release layer between the base and the image structure layer, by adapting it to adhere more strongly to the dielectric or the protective layer as the case may be, than to the base.

The conductive layer (18) comprises a film-forming, organic material, e.g., such as a cation type styrene-methacrylate copolymer having an electrical resistivity of about 1 to 30 meg-ohm per □. Suitable film-forming, organic materials include polymeric quaternary ammonium compounds, polystyrene sulfonic acid, polymeric matrices capable of ionizing inorganic electrolytes contained therein, and the like. The film-forming, organic material may be used alone or with conductive, inorganic materials and/or metals dispersed therein, e.g., such as tin oxide, aluminum and the like.

Figure 4 shows a preferred electrographic imaging element in accordance with the present invention which comprises a base comprising a conductive carrier sheet (12) and a release layer (15). The element further includes a combined dielectric and adhesive layer (16). This combined dielectric and adhesive layer (16), may be any conventional transparent film-forming material having a dielectric constant of about 2 to about 5. This layer typically has a thickness in the range of about 1 µm to about 20 µm and preferably in the range of about 5 µm to about 15 µm.

This transparent combined dielectric and adhesive layer (16) typically comprises one or more polyesters; polyurethanes; polyamides; polyolefins; polycarbonates; polystyrenes; and/or polymers or copolymers of acrylic or methacrylic acids, esters, amides, or the like (such as polymethylmethacrylate), styrenes, acrylonitriles, vinyl esters, alkyd substituted vinyl esters, vinyl alcohol, vinyl acetals (e.g., polyvinyl butyral), vinyl chloride, vinyl fluoride, vinylidene chloride, 1,4-dienes (e.g., butadiene, isoprene and the like); ethylene/vinyl alcohol copolymers; copolymers of styrene with acrylic and methacrylic monomers; modified cellulosic resins such as cellulose acetate and cellulose acetate butyrate; block copolymer thermoplastic rubbers (e.g., styrene/ethylene/ butylene/styrene block copolymer); and blends of the above.

The combined dielectric and adhesive layer (16) in addition to its dielectric properties, is activated at a pressure and, optionally, at a temperature that is above the normal ambient pressure and temperature of the electrographic element prior to use to exhibit its adhesive properties. Thus the combined dielectric and adhesive layer is non tacky prior to activation.

The surface of the imaging layer structure (21) may be made rough to ensure good transfer of charge during passage of the element under the stylus bar during imaging. This roughness can be obtained by including in the uppermost layer particles sufficiently large to give surface irregularities to the layer. Particle composition and size are chosen to give the required surface topography and abrasive properties to the layer. Particles of diameter in the range of about 1 µm to about 15 µm are suitable.

The imaging layer structure (21) may contain in any of its layers, components which strongly absorb ultraviolet radiation thereby reducing damage to underlying images by ambient ultraviolet light, e.g., such as 2-hydroxybenzophenones; oxalanilides; aryl esters and the like; hindered amine light stabilizers, such as bis(2,2,6,6-tetramethyl-4-piperidinyl) sebacate and the like; and combinations thereof. The imaging layer structure serves as a protective layer to the transferred toned image after the image has been transferred onto a receptor substrate as will be described bellow, and is preferably selected to withstand scribing with the point of a 4H pencil without breakthrough.

At times it is desired to provide a range of surface finishes to the finished image. This is done by controlling the surface of the image layer structure in contact with the release layer on the base. The nature of this surface will depend on the nature of the surface of the release layer in contact therewith. Thus if the release layer on the base has a rough texture, the final image will appear matte, and if the release layer surface texture is smooth, the final image will be glossy.

Alternatively, a matte surface on the finished image can be obtained by including in at least one of the layers of the image layer structure particles sufficiently large to give surface irregularities to the layer. Particles of average diameter in the range of about 1 µm to about 15 µm are suitable.

The novel electrographic imaging process comprises the following steps:

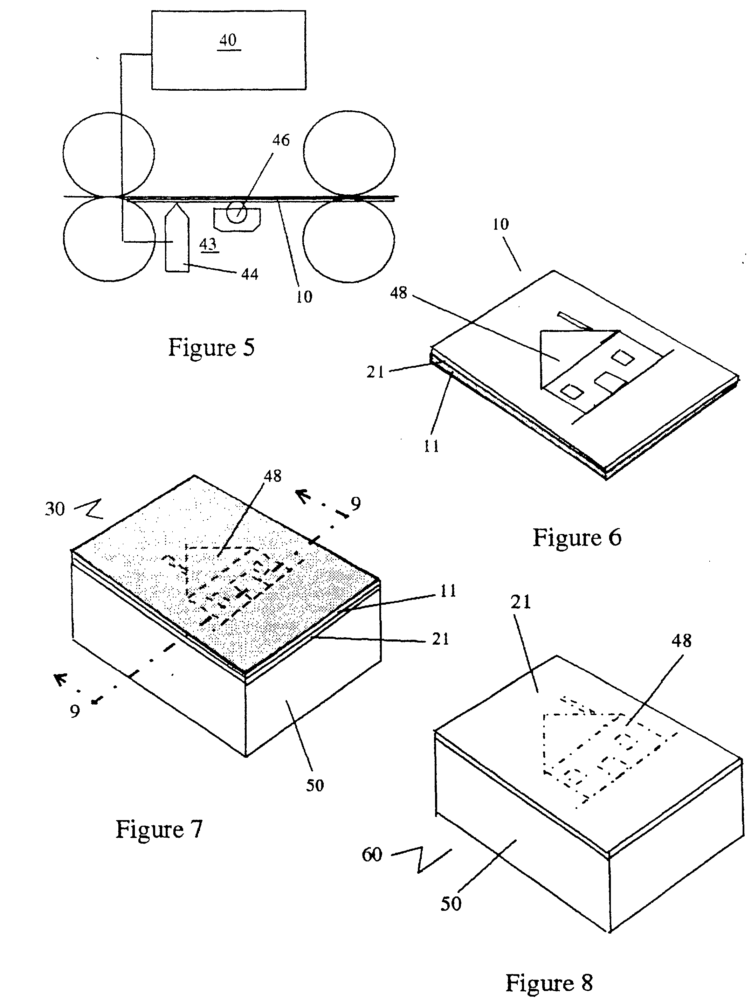

An electrographic toned image is created on the image receptive surface (23) of the imaging layer structure (21) of an electrographic element of the type described above. This is typically done using an electrographic printer of the type shown schematically in figure 5. Such printers are well known in the art and typically may comprise an image source which may be a computer (40), and a mechanical arrangement for generating an image on an electrographic element. The computer (40) in addition to providing image information to the printing station of the printer, usually also controls all functions of the printer, including driving an electrographic element (10) through an imaging station (43) which may comprise an array of styli (44). The computer addresses the styli and instructs them to deposit a predetermined amount of charge on the image receptive surface (23) of the electrographic element. A latent image in the form of a charge distribution is thus formed on the image receptive surface (23) of the electrographic element (10).

The element is next transported through a toning station (46) where an appropriate toner is applied onto the image receptive surface to produce a toned image (48) as shown in figure 6. The toning station may include a fixing substation where the applied toner is fixed, by drying, heat or pressure or any combination thereof, onto the image receptive surface (23).

When a colored image is desired to be reproduced the above process is repeated with additional toners of different colors, in either sequentially arranged imaging and toning stations or by passing the element under the same imaging station and replacing the toner in the toning station. Color reproduction usually requires three and preferably four different color toners to render a pleasing and accurate facsimile of an original color image. The selection of toner colors and the creation of the different images whose combination will provide such accurate rendition of an original image is well known in the art and not the subject of the present invention.

The image (48) created on the image receptive surface in accordance with the present process is a mirror image of the desired reproduction.

The image (48) is next transferred onto a permanent receptor (50), which may be any substrate on which one desires to have the image placed. Figure 7 illustrates this step. Figure 9 is an elevation cross section taken along '9-9' of figure 7, showing the imaged element adhered onto the permanent receptor (50) following lamination. The permanent receptor (50), typically functions as the final support for the imaged electrographic element formed during the process steps of this invention.

The permanent receptor (50) may be any substrate having a surface upon which an electrographic image is to be placed for display. Typically, it is a web or sheet material possessing dimensional stability and adherence properties to the toned image layer of the imaged electrographic element. The web or sheet material may be a flexible polymeric film, e.g., such as polyethylene terephthalate film and the like; a foraminous material, e.g., such as a paper sheet, textile fabrics, and the like; metal films or webs, e.g., such as aluminum, steel, tin-plate, and the like; or any composites or laminates thereof. The permanent receptor may be a rigid or semi-rigid sheeting or plate, e.g., such as sheeting or plates of metal, glass, ceramic, plastic, cardboard, brick wall, papers, paperboards, wood, leathers and composites of the above or laminates thereof. The permanent receptor may vary in size from that of a photographic print, e.g., having an area of about 30 cm² or less, to that of billboards, e.g., having an area of about 70 m² or greater. The permanent receptor may also be surface treated or coated with a material to enhance desired surface characteristics.

When the adhesive layer is not part of the image layer structure, prior to the transfer step, the surface of the permanent receptor that will receive the image, is coated with an adhesive to form adhesive layer (22'). The adhesive may be spayed thereon, or it may be coated with a roller, or again applied by lamination or other coating techniques.

After the image has been produced on the element, and the adhesive layer when so required produced on the receptor, the receptor substrate is preferably pressure laminated onto the surface of the toned image layer structure (21) of the imaged electrographic element (10), preferably at a temperature which is above the ambient temperature. Referring to Figure 10, the receptor substrate (50) is contacted and pressure laminated to the toned image layer (21) using an applied pressure (31) to the back side of the base (11) and receptor substrate (50) to form a laminated imaged electrographic element (30).

The receptor substrate (50) typically is pressure laminated to the toned image surface of the imaged electrographic element (10) under an applied pressure (31) of about atmospheric pressure or greater but may range from about 0.5 kg/cm² to about 100 kg/cm² or more. The term "applied pressure" is intended to mean the absolute pressure which is applied to a unit area of the surface as conventionally derived from the geometry of the pressure means, e.g., the geometry of the laminating nip, in combination with a measurement means, e.g., a calibrated gauge pressure. Suitable means that may be used to apply pressure include platen presses; counterpoised, double roll, laminating devices; scanning, single roll, laminating devices; vacuum laminating devices; and the like. When the receptor substrate (50) has an air impervious surface, roll laminating devices are preferred since they readily minimize air entrapment between the toned image layer and the receptor substrate during the pressure laminating process step. Vacuum may be applied with such devices to further eliminate air entrapment. When the receptor substrate (50) is rigid and roll laminating devices are used, the flexible imaged electrographic element (10) typically is pressure laminated to the receptor substrate (32).

Heat may be used in the pressure laminating step (step (B)) of this invention to raise the temperature of the adhesive (22), (22'), or combined dielectric and adhesive layer (16) from its normal ambient temperature (e.g., room temperature) where it is substantially tack-free, to a temperature at which the adhesive properties are activated. Heat may be applied to the adhesive or combined dielectric and adhesive layer prior to and/or concurrently with the application of the applied pressure (31). Thus, the receptor substrate (50) and/or the imaged electrographic element (10) may be heated prior to pressure lamination by radiant or contact heaters and then laminated while hot. Alternatively the pressure means itself may also function as a heater, e.g., such as a hot roll laminator, or both prior and concurrent heating may be used in combination. Typically, a laminating temperature of about 100°C or greater is employed. Typically, temperature is measured on the surface of the heated roll or platen by means of temperature sensitive tape.

Using the above, surprisingly strong adhesion of the toned electrographic element (10) to the receptor substrate (50) is achieved with substantially no image distortion, even though the toned image layer (48) is interposed between the imaging layer structure and the receptor substrate (50).

If the base is also transparent and if the particular application so requires, the process is terminated at this point. However it is usually preferred to use inexpensive carrier sheet for the base which is neither transparent nor does it weather satisfactorily, so in the preferred mode, the base is stripped from the laminated element, leaving the image receptive layer overlaying the toned image to act as a protective layer for the transferred image to protect the image from scratching, abrasions, environmental components and contaminants, and the like.

Referring again to Figure 10, the base layer (11) is peeled off, using a peel force (41), from the surface of the image layer structure (21) to form an imaged electrographic element. Typically, the base layer (11) is peeled with a peel force (41) directed at an angle of 90° or more from the surface of the image layer structure. The peel rate and the peel force (41) are not critical and preferred values will depend on the nature of the conductive and carrier materials. The temperature at which the base layer (11) is peeled from the image layer structure will depend on the properties of the release layer. Surprisingly has been found that the base layer (11) can be removed immediately after formation of the imaged electrographic element (30) (i.e., while still in a heated state from the lamination in the second process step) without delamination of the imaging layer structure (21) or any of the component layers. In this context, the term "immediately" is intended to mean a time span of about 1 minute or less and preferably between about 1 second and about 20 seconds. Still more preferably the base is removed after about 5 to 10 seconds.

In the practice of the process where the base layer is to be removed, it is preferred to keep the base layer in place on the imaged electrographic element throughout storage and processing in order to prevent any damage or marring to the underlying layers. In this instance, removal of the base layer is the very last step in preparing and mounting the protected electrographic image.

As has also been surprisingly found, the base need not be removed immediately. The formed laminated imaged electrographic element (30) may be cooled and stored before removal of the base. In this instance, the base layer (11) can be removed at room temperature from the imaged electrographic element (30) without delamination of the image layer structure from the receptor.

Alternatively, the imaged electrographic element (30) may be reheated prior to removal of the base layer (11).

The electrographic process of this invention will now be illustrated by the following examples but is not intended to be limited thereby. A number of products by different manufacturers are used in this invention and in the examples below. The following is a reference table for identifying such products and their respective trade names.
(1) Chemistat® 6300H electroconductive polymer is a product of Sanyo Chemical Industries and is a cation type styrene-methacrylate copolymer in aqueous solution.
(2) Butvar® B-76 polyvinyl butyral (weight ave. molecular weight: 90,000-120,000) is a product of Monsanto Company, St. Louis, Missouri.
(3) Butvar® B-79 polyvinyl butyral (weight ave. molecular weight: 50,000-80,000) is a product of Monsanto Company, St. Louis, Missouri.
(4) E-342 Acrylic resin is a product of Rohm and Hass and is a solvent based modified acrylic copolymer.
(5) Syloid® amorphous silica is produced by Davison Chemical Division, W.R. Grace & Co., Baltimore Md. in various average particle sizes
(6) Hydrocarb® PG3 wet ground calcium carbonate with average particle size of 3 µm is a product of OMYA, Proctor, Vermont.
(7) Piccolastic® A-5 low molecular weight polystyrene is a product of Hercules Co., Wilmington, Delaware.
(8) Dowanol® PM is propylene glycol mono methyl ether and is a product of Dow Chemical Corp.
(9) Kraton® FG-1921X is a styrene ethylene butylene styrene block copolymer thermoplastic rubber and is a product of Shell Oil Company, Houston, Texas.
(10) Calcined clay is Translink® calcined clay, and is a product of Englehard Corporation, Edison, N.J.
(11) Lustran® 33-1000 SAN resin is a styrene-acrylonitrile copolymer and is a product of Monsanto Company, St. Louis, Missouri.
(12) Morthane® ca-116 urethane resin is a hydroxyl terminated polyurethane elastomer and is a product of Morton-Thiokol.
(13) Cellulose acetate propionate is C.A.P. 504-0.2 cellulose ester, a product of Eastman Chemicals.
(14) Hexamethoxymethylmelamine is Cymel® 301 melamineformaldehyde crosslinking resin, and is a product of Cyanamid Corporation.
(15) Chemistat® 7005 electroconductive polymer is a product of Sanyo Chemical Industries and is an aqueous solution of a polycationic water-soluble organic polymer. The light yellow liquid contains approximately 40 % active ingredients, has a pH of 4.5, and a viscosity at 25°C of 330 cps.
(16) Polycaprolactone which is Tone® Polymer P-757E biodegradable plastic resin, a product of Union Carbide.

### Example 1

An electrographic element was prepared as follows: A conductive coating solution was prepared from the following ingredients:

| Ingredient | Parts By Weight |
|---|---|
| Methyl alcohol | 80.0 |
| Deionized water | 12.0 |
| Chemistat® 6300H⁽¹⁾ | 8.0 |

The above ingredients were added in the order shown and mixed in a Lightnin® mixer for 5 minutes. The coating was then applied to a ~50 µm (2 mil) thick, untreated, polyethylene terephthalate film with a meyer rod and dried in an air dried oven at 115°C for two minutes to give a dry coating thickness of 2.0 µm.

A dielectric layer coating solution was prepared from the following ingredients.

| Ingredient | Parts By Weight |
|---|---|
| Propylene glycol monomethyl ether | 7.32 |
| Toluene | 21.96 |
| E-342 Acrylic resin⁽⁴⁾ | 56.44 |
| Syloid® 74⁽⁵⁾ Amorphous silica | 12.58 |
| Translink⁽³⁾ 77 Calcined clay, (ave. particle size 0.8 µm) | 1.70 |

The above ingredients were added as shown and mixed using a Cowles dispersion mixer for 10 minutes. The solution was overcoated onto the previously coated film using a meyer rod and dried at 115°C for two minutes to give a dry coating thickness of 5.0 µm.

An adhesive layer coating solution was prepared from the following ingredients.

| Ingredient | Parts By Weight |
|---|---|
| Methyl ethyl ketone | 77.96 |
| Toluene | 10.00 |
| Morthane® CA-116⁽¹²⁾ urethane resin | 12.00 |
| Syloid®⁽⁵⁾ Amorphous silica (ave. particle size 3 µm) | 0.04 |

The coating solution was made by mixing the methyl ethyl ketone, toluene and urethane resin for 30 minutes with a high speed Lightnin® mixer. Amorphous silica was then added and mixed for 5 minutes. The solution was overcoated onto the previously coated film using a meyer rod and dried at 115°C for two minutes to give a dry coating thickness of 2.0 µm to form the electrographic element.

The imaged layer was applied to the surface of the imaging layer structure of the electrographic element formed above, by using a Versatec® V-80 electrostatic plotter operated at conventional plotting conditions.

The laminating step was performed by first laying the imaged electrographic element on a sheet of 20lbs xerographic bond paper so that the imaged layer contacted the paper sheet. This composite was then passed through the hot nip of a hot roll laminator at a speed of 2.54 cm per second and at a pressure of 30 Kg/cm². The hot nip consisted of a heated steel roll at a temperature of 115°C and a hard polyurethane backing roll of a B.F. Perkins laboratory calender. The laminated composite exiting the hot nip was allowed to cool to room temperature and the polyethylene terephthalate film was left in place, adhered to the conductive coating, where it functioned as a protective cover sheet for the finished electrographic element.

### Example 2

The process of Example 1 was repeated except that the laminating step was performed by first laying the imaged electrographic element on a 100 µm (4 mil) thick white vinyl film sheet so that the imaged layer contacted the vinyl sheet. This composite sample was then laminated as in example 9 using B.F. Perkins laboratory calender. Within 10 seconds of the exit of the laminated composite from the hot nip, the polyethylene terephthalate support contiguous to the conductive layer was stripped therefrom.

### Example 3

An electrographic element containing an interposed protective layer was made as follows: An abrasion resistant coating solution was prepared from the following ingredients.

| Ingredient | Parts By Weight |
|---|---|
| Dowanol PM⁽⁸⁾ | 30.41 |
| Ethyl acetate | 26.41 |
| Toluene | 10.96 |
| Butyrolactone | 9.26 |
| C.A.P. 504-0.2⁽¹³⁾ Cellulose acetate propionate | 20.06 |
| Cymel® 301⁽¹⁴⁾ Hexamethoxymethylmelamine | 2.64 |
| Para-toluene sulfonic acid | 0.53 |
| Syloid®⁽⁵⁾ Amorphous silica (ave. particle size 3 µm) | 0.01 |

The cellulose acetate propionate was added to the solvent blend slowly under a high speed Lightnin® mixer. When fully dissolved, the amorphous silica was then added and mixed for five minutes. The melamine resin and acid catalyst were added and mixed for an additional 15 minutes. The resulting lacquer was then coated on a ~25 µm (1 mil) thick,
untreated, polyethylene terephthalate film using a meyer rod and dried at 115°C for two minutes to give a dry coating thickness of 2.5 µm.

A conductive coating solution was prepared from the following ingredients:

| Ingredient | Parts By Weight |
|---|---|
| Methyl alcohol | 80.0 |
| Deionized water | 12.0 |
| Chemistat® 6300H⁽¹⁾ | 8.0 |

The above ingredients were added in the order shown and mixed in a Lightnin® mixer for 5 minutes. The coating was then applied to the surface of the protective coating with a meyer rod and dried in an air dried oven at 115°C for two minutes to give a dry coating thickness of 2.0 µm.

A dielectric layer coating solution was prepared from the following ingredients.

| Ingredient | Parts By Weight |
|---|---|
| Dowanol® PM⁽⁸⁾ | 7.32 |
| Toluene | 21.96 |
| E-342 Acrylic resin⁽⁴⁾ | 56.44 |
| Syloid® 74⁽⁵⁾ Amorphous silica | 12.58 |
| Translink®⁽¹⁰⁾ Calcined clay (ave. particle size 0.8 µm) | 1.70 |

The above ingredients were added as shown and mixed using a Cowles dispersion mixer for 10 minutes. The solution was overcoated onto the previously coated film using a meyer rod and dried at 115°C for two minutes to give a dry coating thickness of 5.0 µm.

An adhesive layer coating solution was prepared as in example 9 and was coated over the dielectric layer.

A toned image was generated on the adhesive surface of the imaging layer structure of the electrographic element formed above, by using a Versatec® V-80 electrostatic plotter operated at conventional plotting conditions.

The imaged element was laminated on a sheet of 201bs. xerographic bond paper as in example 9. After the laminated composite had cooled to room temperature, the remaining polyethylene terephthalate support was stripped from the protective layer of the paper backed electrographic image. The protected electrographic image produced could withstand scribing with a 4H pencil with no removal of the protective layer or image.

### Example 4

An electrographic element was prepared as follows: A conductive coating solution which was Chemistat® 7005⁽¹⁵⁾ was applied to a sheet of 551b conductive opaque base paper (supplied as OCB90 by Chartham Paper Mill, Canterbury, Kent, U.K.) with a #6 meyer rod and dried in an air dried oven at 115°C for two minutes to give a dry coating thickness of ~2µm.

A dielectric layer coating solution was prepared from the following ingredients.

| Ingredient | Parts By Weight |
|---|---|
| Toluene | 66 |
| Dowanol® PM⁽⁸⁾ | 22 |
| Polyvinyl butyral (Butvar® B-79 ⁽³⁾) | 10 |
| Syloid®⁽⁵⁾ Amorphous silica (ave. particle size 3 µm) | 2 |

The above ingredients were added in the order shown and mixed using a Dispermat® mixer for 15 minutes. The solution was overcoated onto the previously coated film using a #14 meyer rod and dried at 115°C for two minutes to give a dry coating thickness of ~ 3 µm.

An adhesive layer coating solution was prepared from the following ingredients.

| Ingredient | Parts By Weight |
|---|---|
| Toluene | 85 |
| Dowanol® PM⁽⁸⁾ | 5 |
| Polycaprolactone⁽¹⁶⁾ | 10 |

The coating solution was made by mixing the ingredients with a high speed Lightnin® mixer until the polycaprolactone was completely in solution. The solution was overcoated onto the previously coated film using a #6 meyer rod and dried at 115°C for two minutes to give a dry coating thickness of ~2 µm to form the electrographic element.

After conditioning a sample of the electrographic element formed above was imaged using the plotter of example 9.

The laminating step was performed by first laying the imaged electrographic element on an adhesively backed sheet of ~0.1 mm (4 mil) thick untreated cast vinyl polymer having a removable release liner so that the imaged layer contacted the vinyl sheet. This composite was then passed through the hot nip of an IT 6000 hot roll laminator at a speed of ~1.02 cm/second, at a temperature of ~ 121°C and at a pressure of ~ 70 kg/cm². The laminated composite exiting the hot nip was cooled to room temperature (5 minutes) and the two sheets were pulled apart leaving image and dielectric coatings on the vinyl sheet and the conductive layer on the conductive paper sheet.

### Example 5

An electrographic element was prepared and processed as described in Example 4 except that the laminating step was performed by first laying the imaged electrographic element on a sheet of ~ 0.14 mm thick cling vinyl coated with an ink receptive layer and backed with a 10 pt. paper liner (Flexmark® CV600 W, manufactured by Flexcon Co., Inc.,Spencer MA.) so that the imaged layer contacted the vinyl sheet. This composite was then passed through the hot nip of an IT 6000 hot roll laminator under the same conditions as in example 12. The laminated composite exiting the hot nip was cooled to room temperature (1 minute) and the two sheets were pulled apart leaving image, dielectric, and conductive coatings on the cling vinyl sheet.

### Example 6

An electrographic element was prepared as described in Example 4 except that the dielectric layer coating solution was prepared from the following ingredients.

| Ingredient | Parts By Weight |
|---|---|
| Toluene | 46.1 |
| Methyl ethyl ketone | 19.1 |
| Dowanol® PM⁽⁸⁾ | 3.8 |
| Polyvinyl butyral (Butvar® B-76⁽²⁾) | 10.0 |
| Styrene-acrylonitrile copolymer (Lustran® 3.3-1000⁽¹¹⁾) | 10.0 |
| Syloid®⁽⁵⁾ Amorphous silica (ave. particle size 3 µm) | 3.0 |

The resulting electrographic element was imaged and processed as described in Examples 12 and 13, except that as the resulting laminated composites exited the hot nip, the two component sheets were pulled apart for each composite, leaving image and dielectric coatings on the vinyl sheet and the conductive layer on the conductive paper sheet.

### Example 7

An electrographic element was prepared as follows: A conductive coating solution was prepared from the following ingredients:

| Ingredient | Parts By Weight |
|---|---|
| Ethyl alcohol | 38.0 |
| Deionized water | 38.0 |
| Chemistat® 6300H⁽¹⁾ | 24.0 |

The above ingredients were added in the order shown and mixed in a Lightnin® mixer for 10 minutes. The coating solution was then applied to a ~50 µm (2 mil) thick, untreated, polyethylene terephthalate film web using a reverse roll coater and hot air dried to give a dry coating weight of
2.4 g/m².

A dielectric layer coating solution was prepared from the following ingredients.

| Ingredient | Parts By Weight |
|---|---|
| Dowanol® PM⁽⁸⁾ | 5.86 |
| Toluene | 49.19 |
| Methyl ethyl ketone | 19.10 |
| Translink® Calcined clay⁽¹⁰⁾ (ave. particle size 1.4 µm) | 1.00 |
| Syloid®⁽⁵⁾ 74 Amorphous silica (Ave. Part. Size 9µm) | 2.10 |
| Styrene-acrylonitrile copolymer (Lustran® 33-1000⁽¹¹⁾) | 22.75 |

The above ingredients were added as shown and mixed in a Kady Zolver tank under slow speed agitation and then allowed to mix for 60 minutes at high speed. The solution was overcoated onto the previously coated film web using a reverse roll coater and hot air dried to give a dry coating weight of ~ 4.8 g/m².

An adhesive layer coating solution was prepared from the following ingredients.

| Ingredient | Parts By Weight |
|---|---|
| Methyl ethyl ketone | 16.00 |
| Toluene | 64.40 |
| Dowanol®^{(a)} | 4.00 |
| Polycaprolactone⁽¹⁶⁾ | 10.00 |
| Morthane® CA-116⁽¹²⁾ urethane resin | 3.00 |
| Calcined clay Translink®⁽¹⁰⁾ (ave. particle size 1.4 µm) | 0.20 |
| Syloid®⁽⁵⁾ Amorphous silica (ave. particle size 9 µm) | 0.40 |

The coating solution was made by first adding the methyl ethyl ketone, toluene and propylene glycol methyl ether acetate to a 55 gallon tub containing a Lightnin® mixer. The calcined clay and the amorphous silica slurry were then added and mixed for 30 minutes. Polycaprolactone was then slowly added under agitation and allowed to mix until dissolved. The urethane resin was then slowly added under agitation and allowed to mix until dissolved. The resulting coating solution was overcoated onto the previously coated film web using a reverse roll coater and hot air dried to give a dry coating thickness of 2.0 µm, to form the electrographic element. Samples of the coated film web were slit to 36 inch (~ 91.4 cm) width, conditioned at 50% RH and imaged in a Calcomp® 6800 series color electrostatic plotter using standard toners and plotting conditions to form a four color imaged layer on the adhesive surface of the electrographic element.

The laminating step was performed by first laying the imaged electrographic element on a sheet of Rexcal® 4000-000 clear cast vinyl sheet (a product of Rexham Branded Products, Lancaster, South Carolina) so that the imaged layer contacted the vinyl sheet. This composite was then passed through the hot nip of an IT 6000 hot roll laminator at a speed of 1.02 cm/second, at a temperature of 121°C and at a pressure of 70 kg/cm². Within 15 seconds of the exit of the laminated composite from the hot nip, the polyethylene terephthalate support contiguous to the conductive layer was stripped therefrom.

### Example 8

An electrographic element was prepared and processed as described in Example 7 except that the laminating step was performed by first laying the imaged electrographic element on a sheet of Rexcal® 4000-000 clear cast vinyl sheet so that the imaged layer contacted the vinyl sheet. This composite was then laminated in a Heat Lamp Vacuum Applicator (a product of Graco Manufacturing Inc., Niles, Michigan), using a bake temperature of 118°C and a bake time of 10 minutes. Within 15 seconds of the removal of the laminated composite from the Heat Lamp Vacuum Applicator, the polyethylene terephthalate support contiguous to the conductive layer was stripped therefrom.

### Example 9

An electrographic element was constructed by extrusion coating a polymeric resin onto a conductive carrier sheet. The conductive carrier sheet was conductivized opaque 90 g/m² paper base (supplied as OCB90 by Chartham Paper Mill, Canterbury, Kent, U.K.).

A layer of Ethylene Vinyl Alcohol (EVOH) ( Kuraray EPE 105A) was extruded onto the base using an extrusion coater to a coating weight of 9 g/m² at a coating line speed of 30 m/min. to form an image receptive dielectric layer having weak adhesion to the carrier sheet.

The coated carrier sheet was then slit to form 11 inch wide stock web (about 28 cm); A monochrome toned electrographic image was produced on the dielectric image receptive layer with a Versatec V80 plotter. This image was a mirror image of the desired image.

An adhesive layer coating solution was prepared as in example 9 and was coated onto the vinyl side of ScotchCal™ 220 adhesive backed vinyl. The mixture was dried in a forced air oven for 30 sec at 115°C. The material was cooled before any use. After cooling the surface was substantially tack free.

The contacting and adhering step was performed by first laying the imaged electrographic element from example 1 on to the vinyl so that the imaged layer contacted the layer of urethane. This composite was then passed through the hot nip of a hot roll laminator at a speed of 0.61 m/min at a pressure of 6.33 kg/cm² (cylinder pressure) and at 107°C. After the composite had cooled to room temperature the base was stripped from the image layer structure. The image on the vinyl support was viewed through the dielectric layer and was properly oriented. The image integrity and the visual quality were retained. The image had an attractive lustrous appearance.

### Example 10

Using the electrographic element disclosed in example 9 imaged as disclosed in that example, the image was transferred onto a steel surface which had been sprayed with 3M Scotch™ Brand Spray Mount™ Artists Adhesive. The adhesive was permitted to dry for 1 minute. The contacting and adhesion step was performed by first laying the imaged electrographic element so that the imaged layer contacted the layer of adhesive sprayed onto the steel surface, and then pressing firmly across the structure. The paper support was stripped from the image receptive layer leaving the image on the steel. The dielectric layer acted as a protective layer overlaying the toner image.

### Example 11

The process of example 10 was repeated but the image was transferred onto a wood surface that had been coated by sparying with 3M Scotch™ Brand Spray Mount™ Artists Adhesive.

### Example 12

An electrographic element prepared in accordance with example 9 was imaged in a Versatec Spectrum color printer using Cyan, Magenta, Yellow and Black liquid toners. The image was then contacted and adhered onto a cardboard sheet having an adhesive coated thereon. The cardboard with the adhesive coated thereon is supplied by Pres-On Merchandizing Corporation of Madison I11. Under the trade name "50 pt. Claycote, Lo-tack", and exhibits adhesive properties at room temperature. Following the adhering step, the carrier sheet was removed and the dielectric image receptive layer with the image remained on the cardboard, with the dielectric layer overlaying the image.

### Example 13

Using the electrographic element of example 12 imaged as described in example 12, the dielectric image receptive layer and the toned color image were successfully transferred to a steel and to a wood surface both which had previously been coated with 3M Scotch™ Brand Spray Mount™ Artists Adhesive, using the process of examples 10 and 11 above respectively. In both instances the carrier layer was removed after contacting and adhering the imaged layer with the tacky permanent receptor leaving on the permanent receptor a right reading image of the original, covered by a transparent dielectric layer.

## Claims

1. An electrographic element comprising a conductive base (11) and a transparent imaging layer structure (21),
wherein the transparent imaging layer structure (21) has a surface (23) on which a toned image is intended to be formed,
wherein the transparent imaging layer structure (21) is transparent in at least one region of the visible spectral region,
wherein the transparent imaging layer structure (21) includes a dielectric layer (20) having a dielectric constant between about 2 and about 5,
wherein the imaging layer structure (21) comprises said dielectric layer (20) and, over said dielectric layer (20), an adhesive layer (22), whose adhesive properties are activated at a pressure above the ambient pressure of the electrographic element, and
wherein the toned image is formed on the adhesive layer (22).

2. An electrographic element according to claim 1, wherein the conductive base comprises a conductive carrier layer (12) having a release layer (15) coated thereon, said release layer (15) being in contact with said transparent imaging layer strucure.

3. An electrographic element according to claim 1 or claim 2 which comprises a protective layer (19) between the conductive base (11) and the dielectric layer (20).

4. An electrographic element according to claim 1, wherein a side of the base (11) in contact with the imaging layer structure (21) comprises an image pattern and wherein a surface of the imaging layer structure in contact with said embossed pattern is embossed with such image pattern.

5. An electrographic element according to any of claims 1 to 4, wherein the imaging layer structure (21) includes a U.V. radiation absorbent layer, such layer located between the base and the toned electrographic image.

6. An electrographic element as claimed in any one previous claim wherein the adhesive properties of the adhesive layer are activated at a pressure and temperature above the ambient pressure and temperature of the electrographic element.

## Patentansprüche

1. Elektrographisches Element, umfassend eine leitende Basis (11) und einen transparenten Abbildungsschicht-Aufbau (21),
wobei der transparente Abbildungsschicht-Aufbau (21) eine Oberfläche (23) aufweist, auf der ein Tonerbild gebildet werden soll,
wobei der transparente Abbildungsschicht-Aufbau (21) in wenigstens einem Bereich des sichtbaren Spektralbereichs transparent ist,
wobei der transparente Abbildungsschicht-Aufbau (21) eine dielektrische Schicht (20) mit einer dielektrischen Konstanten zwischen ungefähr 2 und ungefähr 5 umfasst,
wobei der Abbildungsschicht-Aufbau (21) die dielektrische Schicht (20) und über der dielektrischen Schicht (20) eine Klebeschicht (22) umfasst, deren Klebeeigenschaften bei einem Druck über dem Umgebungsdruck des elektrographischen Elements aktiviert werden,
wobei das Tonerbild auf der Klebeschicht (22) gebildet wird.

2. Elektrographisches Element nach Anspruch 1, wobei die leitende Basis eine leitende Trägerschicht (12) mit einer Freigabeschicht (15), die darauf aufgeschichtet ist, umfasst, wobei die Freigabeschicht (15) in Kontakt mit dem transparenten Abbildungsschicht-Aufbau ist.

3. Elektrographisches Element nach Anspruch 1 oder Anspruch 2, das eine Schutzschicht (19) zwischen der leitenden Basis (11) und der dielektrischen Schicht (20) umfasst.

4. Elektrographisches Element nach Anspruch 1, wobei eine Seite der Basis (11) in Kontakt mit dem Abbildungsschicht-Aufbau (21) ein Bildmuster umfasst und wobei eine Oberfläche des Abbildungsschicht-Aufbaus in Kontakt mit dem eingeprägten Muster mit einem derartigen Bildmuster eingeprägt ist.

5. Elektrographisches Element nach einem der Ansprüche 1 bis 4, wobei der Abbildungsschicht-Aufbau (21) eine U.V.-Strahlung-absorbierende Schicht umfasst, wobei eine derartige Schicht zwischen der Basis und dem elektrographischen Tonerbild angeordnet ist.

6. Elektrographisches Element nach irgendeinem vorangehenden Anspruch, wobei die Klebeeigenschaften der Klebeschicht bei einem Druck und einer Temperatur über dem Umgebungsdruck und der Umgebungstemperatur des elektrographischen Elements aktiviert werden.

## Revendications

1. Elément électrographique comprenant une base conductrice (11) et une structure de couches imageuse transparente (21),
dans lequel la structure de couches imageuse transparente (21) comporte une surface (23) sur laquelle une image de toner est destinée à être formée,
dans lequel la structure de couches imageuse transparente (21) est transparente dans au moins une région de la région du spectre visible,
dans lequel la structure de couches imageuse transparènte (21) inclut une couche diélectrique (20) qui présente une constante diélectrique entre environ 2 et environ 5,
dans lequel la structure de couches imageuse (21) comprend ladite couche diélectrique (20) et, au-dessus de ladite couche diélectrique (20), une couche adhésive (22) dont des propriétés d'adhérence sont activées à une pression au-dessus de la pression ambiante de l'élément électrographique, et
dans lequel l'image de toner est formée sur la couche adhésive (22).

2. Elément électrographique selon la revendication 1, dans lequel la base conductrice comprend une couche de support conductrice (12) qui comporte une couche de libération (15) déposée sur elle, ladite couche de libération (15) étant en contact avec ladite structure de couches imageuse transparente.

3. Elément électrographique selon la revendication 1 ou 2, lequel comprend une couche de protection (19) entre la base conductrice (11) et la couche diélectrique (20).

4. Elément électrographique selon la revendication 1, dans lequel un côté de la base (11) en contact avec la structure de couches imageuse (21) comprend un motif d'image et dans lequel une surface de la structure de couches imageuse en contact avec ledit motif bossé est bossée avec ce motif d'image.

5. Elément électrographique selon l'une quelconque des revendications 1 à 4, dans lequel la structure de couches imageuse (21) inclut une couche absorbeuse de rayonnement UV, cette couche étant située entre la base et l'image électrographique de toner.

6. Elément électrographique selon l'une quelconque des revendications précédentes, dans lequel les propriétés d'adhérence de la couche adhésive sont activées à une pression et à une température qui sont supérieures à la pression et à la température ambiantes de l'élément électrographique.
